Europäisches Patentamt

European Patent Office

Office européen des brevets

(11) Veröffentlichungsnummer: **0 225 966**
**B1**

(12) **EUROPÄISCHE PATENTSCHRIFT**

(45) Veröffentlichungstag der Patentschrift:
14.03.90

(21) Anmeldenummer: 86111033.6

(22) Anmeldetag: 09.08.86

(51) Int. Cl.⁴: **G01N 11/14**

(30) Priorität: 13.12.85  CH 5310/85

(43) Veröffentlichungstag der Anmeldung:
24.06.87 Patentblatt 87/26

(45) Bekanntmachung des Hinweises auf die Patenterteilung:
14.03.90 Patentblatt 90/11

(84) Benannte Vertragsstaaten:
CH DE FR GB IT LI NL SE

(56) Entgegenhaltungen:
GB-A- 684 935
US-A- 3 343 405
US-A- 3 667 286

(54) Verfahren und Vorrichtung zum Messen rheologischer Eigenschaften und Substanzen.

(73) Patentinhaber: CONTRAVES AG,
Schaffhauserstrasse 580, CH-8052 Zürich(CH)

(72) Erfinder: Feier, Markus, Rebbergstrasse 14,
CH-8112 Otelfingen(CH)
Erfinder: Zemp, Georg, Friedheimstrasse 26,
CH-8057 Zürich(CH)

ACTORUM AG

**Beschreibung**

Die Erfindung betrifft eine Vorrichtung zum Messen rheologischer Eigenschaften von Substanzen in einem Rotationsviskosimeter, bei dem ein Meßelement in einen die Substanz aufnehmenden Meßbecher eingetaucht ist, und bei dem der Meßbecher oder das Meßelement mittels zugeordnetem Antriebsorgan um eine vertikale Achse gedreht werden und zusammen eine Meßordnung bilden.

Ein Viskosimeter dieser Art ist beispielsweise bekannt durch das DE-GM 7 637 450. Das Ermitteln einer Fliess- oder Viskositätskurve erfolgt hierbei durch das Einstellen der Drehzahl eines den Meßbecher antreibenden Getriebemotors und Bestimmung des durch die zu messende Substanz auf den Meßkörper und seine Aufhängung übertragenen Drehmoments für verschiedene Drehzahlen. Die Vorgabe der Drehzahl des Meßbechers führt bei einigen strukturviskosen Substanzen zu einer unvollständigen oder ungenauen Bestimmung der Fließkurve.

Aufgrund strukurviskoser Eigenschaften, insbesondere in niederen Viskositätsbereichen, z.B. bei rheologischen Blutuntersuchungen, ändert sich die Eigenschaft bestimmter Substanzen nach Überschreiten einer bestimmten Drehzahl (shear-rate) plötzlich in irreversibler Weise, so daß eine Meßuntersuchung nicht an derselben Probe wiederholt werden kann, um den genauen Übergangswert oder eine Fließgrenze der Substanz zu bestimmen. Außerdem ist die Vorgabe der Drehzahl bei den mit vertretbarem Aufwand zur Verfügung stehenden Antriebssystemen für den Meßbecher verhältnismäßig ungenau, so daß auch bei enger Abstufung der gewählten Drehzahlen, die einem bestimmten Drehmoment (shear stress) aufgrund der spezifischen Eigenschaften der zu messenden Substanz zugehörige Drehzahl nicht exakt bestimmt werden kann.

Der Erfindung liegt die Aufgabe zugrunde, ein Verfahren und eine Vorrichtung der Rheometrie zu entwickeln, welches Verfahren oder welche Vorrichtung die genannten Nachteile durch verbesserten regeltechnischen und konstruktiven Aufbau vermeidet und folglich genauere Viskositätsuntersuchungen besonders bei geringen Viskositätswerten strukturviskoser Substanzen im Bereich bis zur Fließgrenze ermöglicht.

Hinsichtlich des Verfahrens (wie in Anspruch 1 definiert) wird die Aufgabe dadurch gelöst, daß aufgrund einer Drehmoment-Vorgabe an ein zusätzliches, zweites Antriebsorgan das damit wirkverbundene Meßelement aus einer Nullage gering ausgelenkt und der dabei entstehende Drehwinkel gemessen wird, daß aus diesem Drehwinkel ein Meßwertsignal gebildet und über einen Regelkreis dem ersten Antriebsorgan zugeführt wird und daß dadurch das ausgelenkte Meßelement sowie das zweite Antriebsorgan in die Nullage zurückgeführt und dabei die Drehgeschwindigkeit des ersten Antriebsorgans zur Bestimmung der rheologischen Eigenschaften der Substanz verwendet wird.

Vorrichtungstechnisch wird die gestellte Aufgabe im wesentlichen durch die kennzeichnenden Merkmale des Anspruchs 2 gelöst, wobei die weiteren Ansprüche 3 bis 6 vorteilhafte Weiterbildungen der Vorrichtung zum Inhalt haben.

Ausführungsbeispiele der Vorrichtung werden anhand der Zeichnung beschrieben. Es zeigt:

Fig. 1 eine schematische Darstellung eines erfindungsgemäßen Rotationsviskosimeters entsprechend einem ersten und zweiten Ausführungsbeispiel, und

Fig. 2 eine schematische Darstellung eines dritten Ausführungsbeispiels.

Die zu untersuchende Substanz 1 wird in einen durch eine erste Welle 9 mit einem ersten elektromotorischen Antriebsorgan 2 wirkverbundenen Meßbecher 3 eingefüllt, und anschließend wird ein in einer zweiten Welle 5 befestigtes, beispielsweise zylinderisch geformtes Meßelement 4 in die Substanz 1 eingetaucht. Die Teile 2, 9, 3 und 4 bilden hierbei zusammen eine Meßanordnung. Zur Vermeidung achsialer Lagerreibung ist das Meßelement 4 zusammen mit der der Drehmomentmessung dienenden zweiten Welle 5 an einem Torsionsdraht 6 aufgehängt, wobei der Torsionsdraht 6 mit dem einen Ende an einem schematisch dargestellten Teil 7 eines nicht näher dargestellten Gehäuses befesigt ist.

Gegenüber dem bekannten Stand der Technik ist der zweiten Welle 5 zusätzlich zu dem ersten Antriebsorgan 2 ein zweites Antriebsorgan 8, beispielsweise ein Drehmomentmotor angeordnet, welchem Antrieb von einem Sollwertgeber 10 über eine Signalleitung 11, 11' ein Drehmoment vorgegeben wird, welches zwischen dem Gehäuse 7 und der zweiten Welle 5 wirkt. Das Drehmoment entspricht im wesentlichen einer bestimmten Scherspannung bzw. einem bestimmten Viskositätswert der zu untersuchenden Substanz 1. Das erste Antriebsorgan 2 bildet für den von dem zweiten Antriebsorgan 8 verursachten Drehmoment über die Drehzahl einen Gegenwert, so daß ein entsprechendes Diagramm (Fließdiagramm) mit einem hierfür vorgesehenen Gerät (nicht dargestellt) aufgezeichnet werden kann. Das erste Antriebsorgan 2 wird hierfür mittels einer Regelverbindung 12 zwischen ihm und einer Meßeinrichtung 20 auf den genannten Gegenwert derart eingeregelt, daß die Drehmomente der beiden Antriebsorgane 8, 2 sich gegenseitig kompensieren. Die Messung kann folglich ohne wesentliche Torsion der Teile 5 und 6 durchgeführt werden.

Für die Einregulierung der Torsion auf eine Nullposition (Nullage), in der die Drehmomente der beiden Antriebsorgane 2, 8 sich gegenseitig kompensieren, sind an sich verschiedenartige Meßeinrichtungen 20 geeignet, wobei aufgrund der angestrebten hohen Genauigkeit eine an sich bekannte, spiegeloptische Einrichtung vorzuziehen ist.

Die Meßeinrichtung 20 besteht im wesentlichen aus einem an der zweiten Welle 5 befestigten Spiegel 13, einer ortsfest mit dem nicht dargestellten Gehäuse des Viskosimeters verbundenen Lichtquelle 14 und einem photoelektrischen Sensor 15, der an einen Verstärker 16 angeschlossen ist. Entsprechend einer Abweichung eines von der Lichtquelle 14 kommenden und über den Spiegel 13 reflektierten Lichtstrahles 17 aus einer torsionsfreien Nullrichtung steuert der Sensor 15 über den Verstärker 16 den dem elektromotorischen Antriebsorgan 2 über die Regelverbindung 12 zugeführten Strom. Die sich dabei durch die Verdrehung des Meßbechers 3 einstellende Drehzahl kann am Antriebsorgan 2 über eine Signalleitung 18 abgenommen werden. Hierfür ist das Antriebsorgan vorzugsweise als Stufenmotor (Step-Motor) ausgebildet.

Um aufgrund der Federkonstante des Torsionsdrahtes 6 eine Verfälschung des Meßergebnisses zu vermeiden, ist gemäß dem zweiten Ausführungsbeispiel in der Signalleitung 11, 11' eine elektrische Schaltung 22 vorgesehen, die mit dem Verstärker 16 und der Meßeinrichtung 20 über eine gestrichelt dargestellte Signalleitung 21 verbunden ist. Über diese Signalleitung 21 erhält die Schaltung 22 ein Korrektursignal entsprechend der tatsächlichen Auslenkung der zweiten Welle 5.

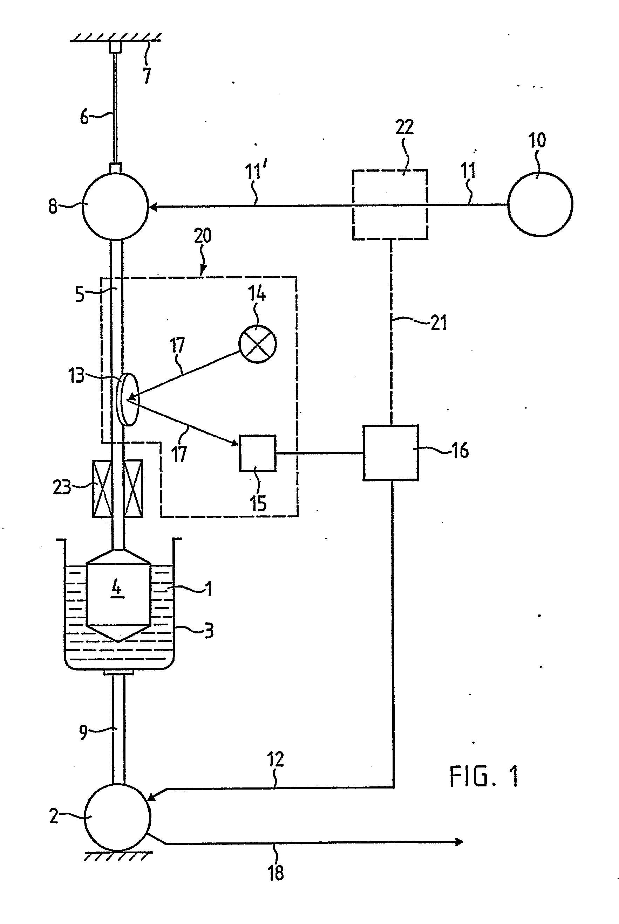

In Fig. 1 ist schematisch ein Radiallager 23 für die Lagerung der zweiten Welle 5 dargestellt, jedoch kann aufgrund der Erfindung bei Verwendung des Viskosimeters für Substanzen mit verhältnismäßig geringer Viskosität auf dieses Lager 23 verzichtet werden, so daß eine von Reibungskräften unbeeinflußte Messung möglich ist. Für die Untersuchung von zäheren Substanzen oder in Fällen, in denen die Zentrierung der Welle 5 bzw. des Meßelements 4 durch das zweite Antriebsorgan 8 nicht ausreicht, kann ein zusammen mit dem Meßelement 4 und der Welle 5 auswechselbares Radiallager 23 vorgesehen sein.

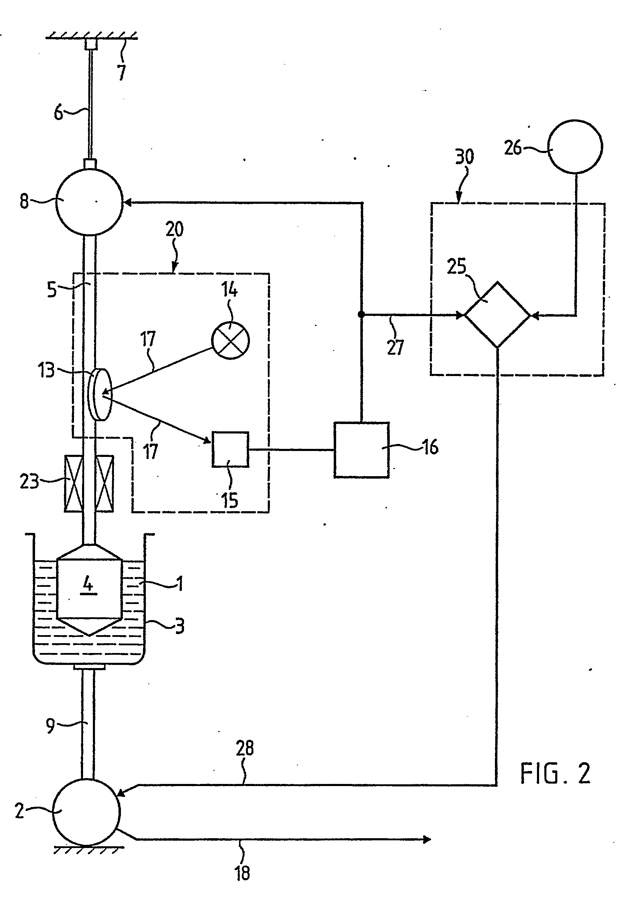

Das Ausführungsbeispiel gemäß Fig. 2 unterscheidet sich vom zuvorbeschriebenen durch eine zusätzlich vorgesehene Regeleinrichtung 30 mit elektrischem Vergleichselement 25, in dem ein von einem Sollwertgeber 26 kommendes Sollwertsignal mit einem von dem zweiten Antriebsorgan 8 und der Meßeinrichtung 20 abgegebenen Istwertsignal verglichen wird, das über eine Signalleitung 27 zugeführt wird. Das Vergleichselement 25 ist mit dem ersten Antriebsorgan 2 über eine Regelverbindung 28 verbunden, so daß das Antriebsorgan 2 derart geregelt wird, dass die Abweichung zwischen Ist- und Sollwert gleich Null wird. Auch bei diesem Ausführungsbeispiel bildet die Drehzahl des Antriebsorgans 2 die zu messende Größe, nachdem die Scherspannung (shear-stress) durch das Drehmoment am Antriebsorgan 8 vorgegeben worden ist.

An dieser Stelle sei darauf hingewiesen, daß die aus der Nullage erfolgende Auslenkung des einen Meßanordnungs-Elements zu dem anderen relativ gering ist und in der Größenordnung von weniger als einem Winkelgrad liegt.

**Patentansprüche**

1. Verfahren zum Messen rheologischer Eigenschaften von Substanzen in einem Rotationsviskosimeter, bei dem ein in einen die Substanz aufnehmenden Meßbecher (3) eingetauchtes Meßelement (4) und der gegenüber dem Meßelement (4) mittels zugeordnetem Antriebsorgan (2) um eine vertikale Achse drehende Meßbecher (3) zusammen eine Meßanordnung bilden, dadurch gekennzeichnet, daß aufgrund einer Drehmoment-Vorgabe an ein zusätzliches, zweits Antriebsorgan (8) das damit wirkverbundene Meßelement (4) aus einer Nullage ausgelenkt und der dabei entstehende Drehwinkel gemessen wird, daß das diesem Drehwinkel entsprechende Meßwertsignal gebildet und über einen Regelkreis dem ersten Antriebsorgan (2) zugeführt wird, welches den Meßbecher (3) in entgegengesetzter Drehrichtung drehzahlgeregelt dreht, daß dadurch das ausgelenkte Meßelement (4) entgegen dem antreibenden Drehmoment des zweiten Antriebsorgans (8) in die Nullage zurückgeführt und dabei die Drehgeschwindigkeit des ersten Antriebsorgans (2) zusammen mit der Drehmoment-Vorgabe zur Bestimmung der rheologischen Eigenschaften der Substanz (1) verwendet wird.

2. Rotationsviskosimeter zur Durchführung des Verfahrens nach Anspruch 1, welcher mit einem Meßbecher (3), einem ersten, elektromotorischen Antriebsorgan (2), einem über einen Torsionsdraht (6) und einer zweiten Welle (5) freihängend in dem Meßbecher (3) angeordneten Meßelement (4) und einer entsprechend zugeordneten Meßeinrichtung (20) zur Bestimmung der Auslenkung der zweiten Welle (5) ausgestattet ist, dadurch gekennzeichnet, daß der zweiten Welle (5) ein zweites Antriebsorgan (8) in Form eines Drehmomentgebers zugeordnet ist, welches über eine Signalleitung (11, 11') mit einem Sollwertgeber (10, 26) in Wirkverbindung steht und daß eine Regelverbindung (12) zwischen der Meßeinrichtung (20) und dem ersten Antriebsorgan (2) besteht, welche die Drehzahl des Meßbechers (3) so einregelt, daß die von der Meßeinrichtung (20) erfaßte Auslenkung der zweiten Welle (5) auf Null abgeglichen wird.

3. Rotationsviskosimeter nach Anspruch 2, wobei die Meßeinrichtung (29) einen an der zweiten Welle (5) befestigten Spiegel (13) mit zugeordneter Lichtquelle (14) und zugeordnetem photoelektrischem Sensor (15) aufweist und mit einem Verstärker (13) in Wirkverbindung steht.

4. Rotationsviskosimeter nach Anspruch 2 oder 3, wobei in der Signalleitung (11, 11') zur Vorgabe eines Drehmomentes an das zweite Antriebsorgan (8) eine die Federwirkung des Torsionsdrahtes (6) kompensierende Korrekturschaltung (22) vorgesehen ist.

5. Rotationsviskosimeter nach einem der Ansprüche 2 bis 4, wobei das Meßbecher-Antriebsorgan (2) mit dem zweiten Antriebsorgan (8) und der Meßeinrichtung (20) über eine Regeleinrichtung (30) mit elektrischem Vergleichselement (25) für den Soll-Istwertausgleich verbunden ist.

6. Rotationsviskosimeter nach einem der Ansprüche 2 bis 5, wobei die zweite Welle (5) durch ein zusammen mit ihr austauschbares Radiallager (23) geführt ist für den wahlweisen Betrieb des Viskosimeters mit einer lagerfreien Welle (5).

**Claims**

1. Process for measuring rheological properties of substances in a rotary viscosimeter in which a measuring element (4) immersed in a measuring beaker (3) containing the substance, and the measuring beaker (3) rotating about a vertical axis opposite the measuring element (4) by means of an associated driving mechanism 2, together form the measuring equipment, characterised in that by virtue of a torque control signal to an additional second driving mechanism (8) the measuring element (4) operatively connected with it is deflected out of a neutral position and the resulting angle of rotation is measured, in that a test value signal corresponding to this angle of rotation is formed and is conveyed via a control loop to the first driving mechanism (2) which rotates the measuring beaker (3) in opposite rotational direction controlled by the rotational speed, on that the deflected measuring element (4) is thereby returned to the neutral position contrary to the driving torque of the second driving mechanism (8), and the rotational speed of the first driving mechanism (2) is used together with the torque control signal to determine the rheological properties of the substance (1).

2. Rotary viscosimeter for carrying out the process according to claim 1, equipped with a measuring beaker (3), a first electric motor driving mechanism (2), a measuring element (4) freely suspended in the measuring beaker (3) via a torsion wire (6) and a second shaft (5), and a correspondingly associated measuring device (20) for determining the deflection of the second shaft (5), characterised in that a second driving meachnism (8) in the form of a torque setter is assigned to the second shaft (5), which second driving mechanism (8) is operatively connected via a signal line (11, 11') with a desired value setter (10, 26) and in that between the measuring device (20) and the first driving mechanism (2) there is a regulating connection (12) which regulates the rotational speed of the measuring beaker (3) so that the deflection of the second shaft (5) detected by the measuring device (20) is neutralised.

3. Rotary viscosimeter according to claim 2, wherein the measuring device (20) has a mirror (13) fixed on the second shaft (5), an associated ligth source (14), and an associated photoelectric sensor (15) operatively connected to an amplifier (13).

4. Rotary viscosimeter according to claim 2 or 3, wherein a correcting switch (22) is provided in the signal line (11, 11') to provide a torque onto the second driving mechanism (8), which correcting switch (22) compensates for the spring effect of the torsion wire (6).

5. Rotary viscosimeter according to one of claims 2 to 4, wherein the measuring beaker-driving mechanism (2) is connected with the second driving mechanism (8) and the measuring device (20) via a regulating device (30) with an electrical comparator (25) for the desired-actual compensation.

6. Rotary viscosimeter according to one of claims 2 to 5, wherein the second shaft (5) is carried by a radial bearing (23) which is replaceable together with it for the selective operation of the viscosimeter with an unsupported shaft (5).

## Revendications

1. Procédé pour mesurer les propriétés rhéologiques de substances dans un viscosimètre à rotation, selon lequel un élément de mesure (4) immergé dans un récipient de mesure (3) qui contient la substance et qui forme avec l'élément de mesure (4) une installation de mesure grâce à un organe d'entraînement (2) qui entraîne en rotation le récipient de mesure (3) autor d'un axe vertical, procédé caractérisé en ce qu'en prédéterminant un couple sur un second organe d'entraînement (8), complémentaire, l'élément de mesure (4) qui coopère est dévié à partir d'une position zéro et on mesure l'angle de rotation ainsi formé et en ce qu'on forme le signal de la grandeur de mesure correspondant à cet angle de rotation pour l'appliquer au premier organe d'entraînement (12) par l'intermédiaire d'un circuit de régulation, cet organe faisant tourner à une vitesse de rotation réglée, le récipient de mesure (3) dans le sens de rotation opposé, et en ce que l'élément de mesure (4), dévié, est remis dans la position zéro contre le couple d'entraînement du second organe d'entraînement (8) et en ce qu'on utilise la vitesse de rotation du premier organe d'entraînement (2) ainsi que le couple prédéterminé, pour déterminer les propriétés rhéologiques de la substance 1.

2. Viscosimètre de rotation pour la mise en œuvre du procédé selon la revendication 1, comportant un récipient de mesure (3), un premier organe d'entraînement (2) à moteur électrique, un élément de mesure (4) suspendu à un fil de torsion (6) et un second arbre (5), librement dans le récipient de mesure (3), ainsi qu'une installation de mesure (20), prévue de manière correspondante pour déterminer la déviation du second arbre (5), viscosimètre caractérisé en ce que le second arbre (5) comporte un second organe d'entraînement (8) sous la forme d'un générateur de couple qui est relié par une ligne de transmission de signaux (11, 11') à un générateur de valeur de consigne (10, 26) pour coopérer avec celui-ci et en ce qu'une liaison de régulation (12) existe entre l'installation de mesure (20) et le premier organe d'entraînement (2), liaison qui règle la vitesse de rotation du récipient de mesure (3) pour compenser à zéro la déviation du second arbre (5) détectée par l'installation de mesure (20).

3. Viscosimètre de rotation selon la revendications 2, caractérisé en ce que l'installation de mesure (1) comprend un miroir (13) fixé au second arbre (5) et une source lumineuse (14) ainsi qu'une cellule photo-électrique (15) et un amplificateur (13).

4. Viscosimètre de rotation selon les revendications 2 ou 3, caractérisé en ce que dans la ligne de transmission des signaux (11, 11'), pour prédéterminer un couple, on prévoit sur le second organe d'entraînement (8), un circuit de correction (22) qui compense l'action de ressort du fil de torsion (6).

5. Viscosimètre de rotation selon l'une des revendications 2 à 4, caractérisé en ce que l'organe d'entraînement (2) du récipient de mesure est relié au second organe d'entraînement (8) et à l'installation de mesure (20) par une installation de régulation (30) et un élément de comparaison électrique (25) pour compenser la valeur réelle et la valeur de consigne.

6. Viscosimètre de rotation selon l'une des revendications 2 à 5, caractérisé en ce que le second arbre (5) traverse un palier radial (23) qui peut être échangé avec cet arbre pour permettre au choix le fonctionnement du viscosimètre avec un arbre (5) sans palier.

FIG. 1

FIG. 2